# EUROPEAN PATENT SPECIFICATION

(11) **EP 4 135 392 B1**
(45) Date of publication and mention of the grant of the patent: **06.08.2025**
(21) Application number: 21191172.2
(22) Date of filing: 13.08.2021
(51) Int. Cl.: H04L 67/06, H04L 41/0233, H04L 41/0853, H04L 41/14, H04L 43/06, H04W 24/10

(54) **FILE UPLOAD MANAGEMENT**
VERWALTUNG DES HOCHLADENS VON DATEIEN
GESTION DE TÉLÉVERSEMENT DE FICHIER

(43) Date of publication of application: 15.02.2023
(73) Proprietor: Nokia Technologies Oy, 02610 Espoo (FI)
(72) Inventor: POLLAKOWSKI, Olaf, 14057 Berlin (DE); HORN, Linda, Randolph NJ, 07869 (US)
(74) Representative: TBK

(56) References cited:
- WO-A1-2017/222609
- KR-A- 20070 088 481
- US-A1- 2019 253 912

## Description

### Field

Various example embodiments relate to file upload management. More specifically, various example embodiments exemplarily relate to measures (including methods, apparatuses and computer program products) for realizing file upload management.

### Background

The present specification generally relates to file based communication between two entities in a network.

Files are used in - e.g. - Third Generation Partnership Project (3GPP) management for many purposes.

For example, measurements produced by a management service (MnS) producer associated to a network function (NF) are written into files that are made available to MnS consumers.

As a further example, key performance indicators (KPI) computed by a MnS producer associated to a management function (MnF) (based on received measurements) are written into files that are made available to MnS consumers.

As a still further example, trace and minimization of drive tests (MDT) data produced by a MnS producer associated to a network are written into files that are made available to data consumers.

Further examples include analytics that are reported using files.

In each of these cases, the files generated by the MnS producer need to be uploaded to a MnS consumer that is using the data in the files for some purpose.

The upload of a file from a MnS producer to a MnS consumer is initiated either by the MnS producer or by the MnS consumer.

When initiated by the MnS producer, the MnS producer needs to know only the address of the MnS consumer where to upload the files. Whilst this method is rather simple, it suffers from a serious drawback. Namely, the MnS consumer has no control over what is uploaded to him or pushed onto him. The MnS consumer can only indirectly control the uploads by managing the related jobs controlling the data production and reporting activities on the MnS producer.

For that reason, it is typically preferred that the upload is initiated by the MnS consumer.

As an example, 3GPP Technical Specification (TS) 28.532, clause 11.6, describes a dedicated MnS for managing file uploads from MnS producers to MnS consumers. This dedicated MnS features a special operation named "listAvailableFiles" allowing MnS consumers to get a list of all files available for upload on a MnS producer, and a special notification named "notifyFileReady" allowing MnS producers to inform MnS consumers about the availability and location of new files.

To transfer files, file transfer protocol (FTP) (or secure file transfer protocol (SFTP)) is used.

To receive the "notifyFileReady" notification, the MnS consumer needs to create a subscription for this notification on the MnS producer. The MnS consumer needs to know how to create such subscription.

The thus provided dedicated MnS featuring the above-outlined special operation ("listAvailableFiles") and special notification ("notifyFileReady") lacks flexibility and requires overly abilities on both the MnS consumer and the MnS producer sides.

Hence, the problem arises that overly abilities are required on both the MnS consumer and the MnS producer sides to enable file uploading with little flexibility.

Hence, there is a need to provide for file upload management.

*Further prior art can be found in document* US 2019/253912 A1*, disclosing operations and notifications for performance management of 5G networks and network slicing. According thereto, an apparatus of a management service producer comprises one or more processors to create a measurement job for one or more network functions (NF), network slice subnet instances (NSSI), network slice instances (NSI), networks or subnetworks by receiving a CreateMeasurementJob operation request for creating a measurement job for the one or more NFs, NSSIs, NSIs, networks or subnetworks from a consumer, checking if one or more new measurement types need to be collected for the one or more NFs or constituent NSSIs or constituent NFs, requesting the NFs or the management service producer of the constituent NSSIs or constituent NFs to collect the performance data when one or more new measurements types are to be collected for the one or more NFs or constituent NSSIs or constituent NFs. The management service producer allows the consumer to choose the reporting method from performance data file reporting and performance data streaming for the collected performance data in the CreateMeasurementJob operation request.*

Further prior art can be found in document WO 2017/222609 A1, disclosing end-to-end techniques to collect performance measurement (PM) data from a network function virtualization (NFV) infrastructure (NFVI), including creating PM jobs at the NFVI based on a request from a network manager (NM), subscribing one or more data available notifications associated with a virtual network function (VNF) related virtualization resource (VR) PM job, and reporting PM data available notification(s) to the NM.

*Further prior art can be found in document* KR 2007 00 88 481 A*, disclosing rule-based data collection and management in wireless communication networks.*

### Summary

Various example embodiments aim at addressing at least part of the above issues and/or problems and drawbacks.

Various aspects of example embodiments are set out in the appended claims.

According to an exemplary aspect, there is provided a method comprising transmitting a collection job request requesting a data collection job, and receiving a collection job response, wherein said collection job response includes information on file uploading related to said data collection job.

According to an exemplary aspect, there is provided a method comprising receiving a collection job request requesting a data collection job, creating a job instance representing said data collection job, and transmitting a collection job response, wherein said collection job response includes information on file uploading related to said data collection job.

According to an exemplary aspect, there is provided an apparatus comprising transmitting circuitry configured to transmit a collection job request requesting a data collection job, and receiving circuitry configured to receive a collection job response, wherein said collection job response includes information on file uploading related to said data collection job.

According to an exemplary aspect, there is provided an apparatus comprising receiving circuitry configured to receive a collection job request requesting a data collection job, creating circuitry configured to create a job instance representing said data collection job, and transmitting circuitry configured to transmit a collection job response, wherein said collection job response includes information on file uploading related to said data collection job.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform transmitting a collection job request requesting a data collection job, and receiving a collection job response, wherein said collection job response includes information on file uploading related to said data collection job.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform receiving a collection job request requesting a data collection job, creating a job instance representing said data collection job, and transmitting a collection job response, wherein said collection job response includes information on file uploading related to said data collection job.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient implementation of file based communication, in particular of file uploads, between two entities in a network, to thereby solve at least part of the problems and drawbacks identified in relation to the prior art.

By way of example embodiments, there is provided file upload management. More specifically, by way of example embodiments, there are provided measures and mechanisms for realizing file upload management.

Thus, improvement is achieved by methods, apparatuses and computer program products enabling/realizing file upload management.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a schematic diagram of a procedure according to example embodiments,
Figure 6 is a schematic diagram of a procedure according to example embodiments,
Figure 7 (Figures 7(A) and 7(B)) shows a schematic diagram of signaling sequences according to example embodiments,
Figure 8 (Figures 8(A) and 8(B)) shows a schematic diagram of signaling sequences according to example embodiments, and
Figure 9 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) file upload management.

As mentioned above, a dedicated MnS featuring the above-outlined special operation ("listAvailableFiles") and special notification ("notifyFileReady") lacks flexibility and requires overly abilities on both the MnS consumer and the MnS producer sides.

The following improvements over current implementations/approaches can be identified when starting from example embodiments described below in more detail.

Unlike with example embodiments, to transfer files utilizing the above-outlined special operation and special notification, FTP (or SFTP) is used, whereas hypertext transfer protocol (HTTP) (or hypertext transfer protocol secure (HTTPS)) is used for the request and response messages of the operations and notifications of the MnS. This requires the MnS producer and MnS consumer to support two protocol stacks, one for FTP/SFTP, and one for HTTP/HTTPS. However, it is desirable (and achieved according to example embodiments) to have just one protocol stack to minimize implementation cost. Utilizing HTTP (or HTTPS) for communication of request and response messages as well as for file transfer is not possible today in the 3GPP solution.

Further, unlike with example embodiments, according to the current approach outlined above, a dedicated MnS is used for managing file uploads. This approach does not integrate well with the new model-driven approach followed by 3GPP SA5, where one holistic information model and generic create, read, update, delete (CRUD) operations only are used for specifying management services. Example embodiments do.

Still further, unlike with example embodiments, in the current approach as outlined above, the MnS producer cannot provide any information to the MnS consumer on where to create a subscription for the "notifyFileReady" notification. The MnS consumer (however) needs to know where to create subscriptions on the MnS producer. According to example embodiments, such necessity is removed.

Still further, unlike with example embodiments, in the current approach as outlined above, when a MnS consumer cannot receive notifications or a MnS producer cannot send notifications, the MnS consumer may use only the operation "listAvailableFiles" to find out if new files are available for him and where to get them. A disadvantage of this approach is that the MnS consumer gets always a list with all files on the MnS producer available for upload and needs to scan through a potentially large number of file meta data for identifying the file the MnS consumer is interested in and retrieve it based on that information. Here, it is noted that the capability to receive (and send) notifications always comes with additional implementation effort, since the MnS consumer and MnS producer must support both an HTTP server and HTTP client protocol stack. When no notifications need to be sent and received, according to example embodiments, the MnS producer just needs to have a HTTP server protocol stack and the MnS consumer a HTTP client protocol stack.

Still further, as described above, files are often used to store and report management data produced on a MnS producer. This data is produced as a result of a request by MnS consumers. MnS consumers request data production by instantiating so called (data production) jobs on the MnS producer. In the service based management architecture (SBMA), many different MnS consumers can create jobs on a MnS producer. However, unlike with example embodiments, in the current approach as outlined above, the file information in the "listAvailableFiles" response or the "notifyFileReady" notification does not contain any information allowing a MnS consumer to associate a job on a MnS producer to the files generated by this job and stored on the producer. In other words, the MnS consumer cannot really find out if a file was produced based on the MnS consumer's request or based on another MnS consumer's request. The current functionality thus only works in deployment scenarios where a single MnS consumer interacts with a MnS producer. This is due to historical reasons. The current file upload MnS as outlined above was originally designed for a single client architecture. When SA5 migrated to SBMA, the old functionality was not improved. Here, it is noted that a job identifier (ID) might be included in a file name. The file name is part of the file information conveyed to the MnS consumer. The MnS consumer could hence parse the file name to check whether job IDs of interest are contained in the file name. This approach, however, is not really straight forward, clean and easy to implement. According to example embodiments, thus straight forward, clean and easy to implement measurements are provided, which enable that only files of interest for the MnS consumer are adverted and uploaded.

Still further, unlike with example embodiments, in the current approach as outlined above, is not possible to send to the MnS consumer in the "listAvailableFiles" response or the "notifyFileReady" notification only file information for files associated to jobs the MnS consumer created or is interested in. Here, it is noted that the job ID might be included in the file name. A subscription filter could be set that filters out all "notifyFileReady" notifications whose file names do not contain certain job IDs. However, this does not ensure that the MnS consumer gets only file information of interest. Only if the set of file information in a notification does not contain the job ID, the complete notification is filtered out. Leave alone that filtering on substrings in complex data types is not easy to implement or can run on nodes with limited processing power. According to example embodiments, thus, it is enabled that only files of interest for the MnS consumer are adverted and uploaded.

Still further, unlike with example embodiments, the current approach as outlined above relies on implementing an operation and/or a notification. It does not allow for very simple implementations, where, e.g., the MnS consumer just polls a location on the MnS producer where only the MnS consumer's files are stored, as example embodiments do.

Still further, unlike with example embodiments, in the current approach as outlined above, when a MnS consumer creates a data production job with file based reporting, the MnS consumer needs to create the subscription for the "notifyFileReady" notification in a second step using a new create operation. It is not possible with the current approach to ask the MnS producer in the job creation request to create an implicit subscription. Such a capability is desirable for efficient operational processes. Accordingly, according to example embodiments, a possibility to ask the MnS producer in the job creation request to create an implicit subscription is provided.

Still further, unlike with example embodiments, in the current approach as outlined above, MnS consumers cannot delete files on MnS producers or indicate to the MnS producers that they are not interested any more in files, e.g. after retrieval of the file. Such functionality is provided according to example embodiments.

Hence, in brief, according to example embodiments, a fully model-driven approach using normal CRUD operations only to manage file uploads is provided.

Example embodiments are specified below in more detail.

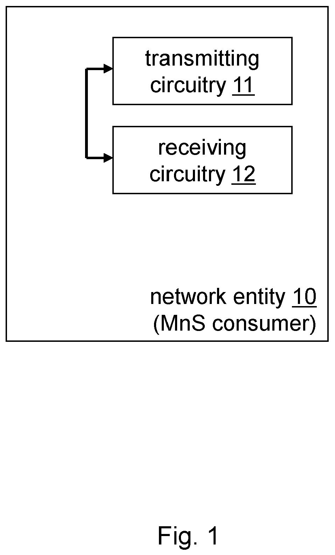

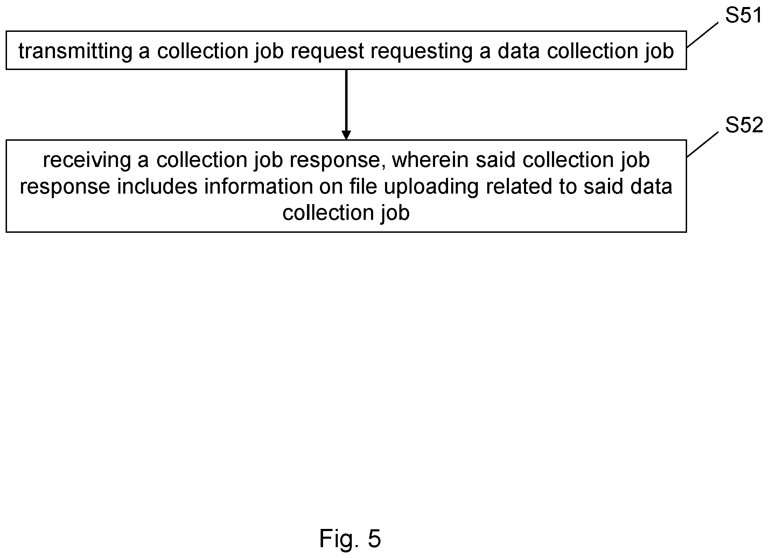

Figure 1 is a block diagram illustrating an apparatus according to example embodiments. The apparatus may be a network entity 10 such as a management service consumer (entity) comprising a transmitting circuitry 11 and a receiving circuitry 12. The transmitting circuitry 11 transmits a collection job request requesting a data collection job. The receiving circuitry 12 receives a collection job response. Here, the collection job response includes information on file uploading related to said data collection job. Figure 5 is a schematic diagram of a procedure according to example embodiments. The apparatus according to Figure 1 may perform the method of Figure 5 but is not limited to this method. The method of Figure 5 may be performed by the apparatus of Figure 1 but is not limited to being performed by this apparatus.

As shown in Figure 5, a procedure according to example embodiments comprises an operation of transmitting (S51) a collection job request requesting a data collection job, and an operation of receiving (S52) a collection job response. Here, the collection job response includes information on file uploading related to said data collection job.

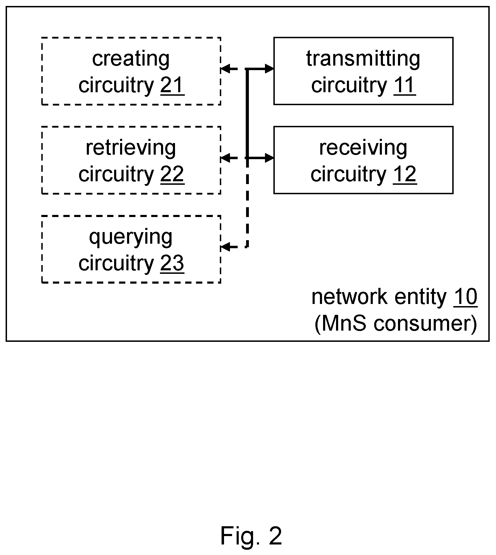

Figure 2 is a block diagram illustrating an apparatus according to example embodiments. In particular, Figure 2 illustrates a variation of the apparatus shown in Figure 1. The apparatus according to Figure 2 may thus further comprise a creating circuitry 21, a retrieving circuitry 22, and/or a querying circuitry 23.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to further example embodiments, said collection job response includes an identifier of a job instance representing said data collection job.

According to further example embodiments, said information on file uploading related to said data collection job includes information on a file availability notification subscription address.

According to a variation of the procedure shown in Figure 5, exemplary additional operations are given, which are inherently independent from each other as such. According to such variation, an exemplary method according to example embodiments may comprise an operation of creating a file availability notification subscription for said data collection job based on said file availability notification subscription address, and an operation of transmitting said file availability notification subscription.

According to further example embodiments, said file availability notification subscription includes an identifier of a job instance representing said data collection job.

According to a variation of the procedure shown in Figure 5, exemplary details of the creating operation are given, which are inherently independent from each other as such. Such exemplary creating operation according to example embodiments may comprise an operation of creating a subscription instance name-contained by said job instance, or an operation of creating a subscription instance name-contained by a predetermined realm instance.

According to a variation of the procedure shown in Figure 5, exemplary additional operations are given, which are inherently independent from each other as such. According to such variation, an exemplary method according to example embodiments may comprise an operation of receiving a file availability notification subscription acknowledgement including an identifier of said file availability notification subscription.

According to further example embodiments, said collection job request is indicative of a notification recipient address.

According to further example embodiments, said collection job response includes an identifier of a file availability notification subscription created in response to said notification recipient address.

According to a variation of the procedure shown in Figure 5, exemplary additional operations are given, which are inherently independent from each other as such. According to such variation, an exemplary method according to example embodiments may comprise an operation of transmitting a request for deletion of said file availability notification subscription, said request for deletion of said file availability notification subscription includes said identifier of said file availability notification subscription.

According to a variation of the procedure shown in Figure 5, exemplary additional operations are given, which are inherently independent from each other as such. According to such variation, an exemplary method according to example embodiments may comprise an operation of receiving a file availability notification. Here, the file availability notification includes information on a file location of a file object instance representing a file generated based on data collected for said data collection job.

According to further example embodiments, said file availability notification includes an identifier of a job instance representing said data collection job.

According to a variation of the procedure shown in Figure 5, exemplary additional operations are given, which are inherently independent from each other as such. According to such variation, an exemplary method according to example embodiments may comprise an operation of retrieving file content of said file and/or file meta data of said file from said file location.

According to further example embodiments, said collection job request is indicative of a requested file-based reporting with notifications.

According to further example embodiments, said information on file uploading related to said data collection job includes information on a file retrieval address.

According to a variation of the procedure shown in Figure 5, exemplary additional operations are given, which are inherently independent from each other as such. According to such variation, an exemplary method according to example embodiments may comprise an operation of querying information on available files from said file retrieval address, and an operation of receiving said information on said available files.

According to a variation of the procedure shown in Figure 5, exemplary additional operations are given, which are inherently independent from each other as such. According to such variation, said information on said available files includes information on a file location of a file object instance representing a file generated based on data collected for said data collection job, and an exemplary method according to example embodiments may comprise an operation of retrieving file content of said file and/or file meta data of said file from said file location.

According to further example embodiments, said information on said available files includes an identifier of a job instance representing said data collection job associated with said file object instance representing said file generated based on data collected for said data collection job.

According to further example embodiments, said information on said available files includes file content of said available files and/or file meta data of said available files.

According to further example embodiments, said collection job request is indicative of a requested file-based reporting with polling.

According to a variation of the procedure shown in Figure 5, exemplary additional operations are given, which are inherently independent from each other as such. According to such variation, an exemplary method according to example embodiments may comprise an operation of transmitting a request for deletion of a file object instance representing a file generated based on data collected for said data collection job.

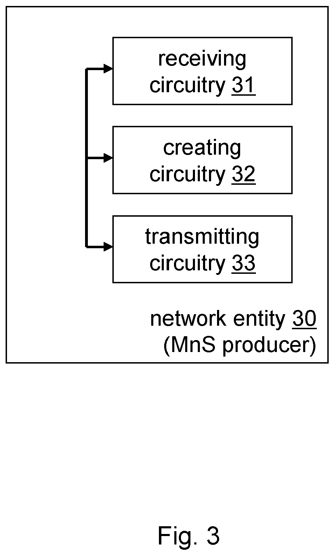

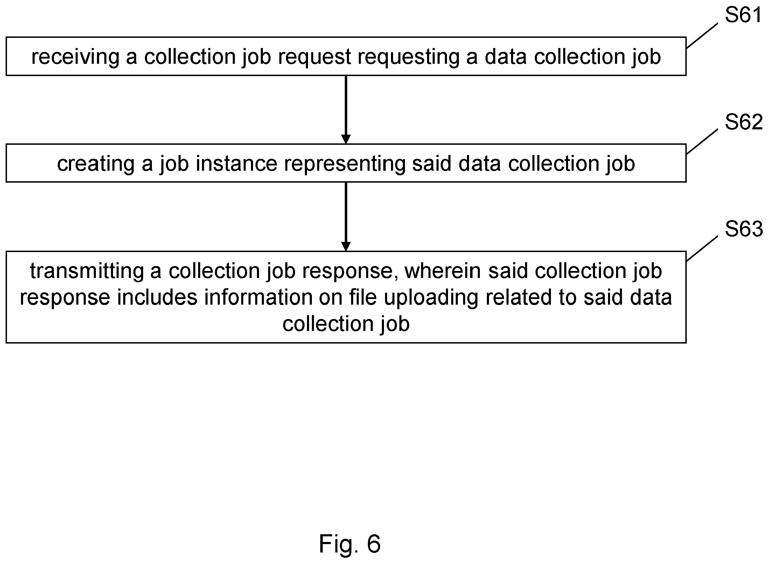

Figure 3 is a block diagram illustrating an apparatus according to example embodiments. The apparatus may be a network entity 30 such as a management service producer (entity) comprising a receiving circuitry 31, a creating circuitry 32, and a transmitting circuitry 33. The receiving circuitry 31 receives a collection job request requesting a data collection job. The creating circuitry 32 creates a job instance representing said data collection job. The transmitting circuitry 33 transmits a collection job response. Here, the collection job response includes information on file uploading related to said data collection job. Figure 6 is a schematic diagram of a procedure according to example embodiments. The apparatus according to Figure 3 may perform the method of Figure 6 but is not limited to this method. The method of Figure 6 may be performed by the apparatus of Figure 3 but is not limited to being performed by this apparatus.

As shown in Figure 6, a procedure according to example embodiments comprises an operation of receiving (S61) a collection job request requesting a data collection job, an operation of creating (S62) a job instance representing said data collection job, and an operation of transmitting (S63) a collection job response. Here, the collection job response includes information on file uploading related to said data collection job.

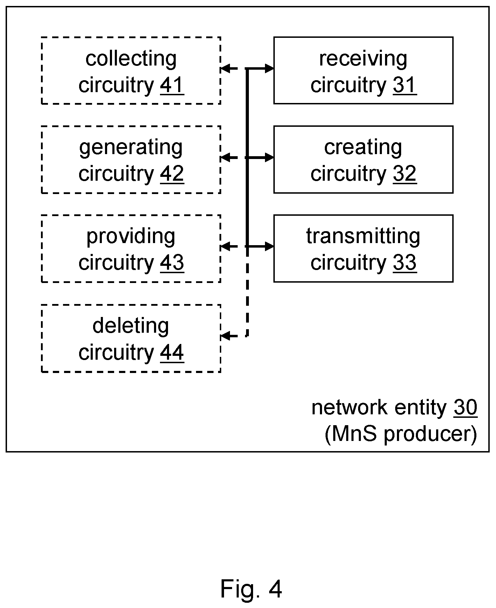

Figure 4 is a block diagram illustrating an apparatus according to example embodiments. In particular, Figure 4 illustrates a variation of the apparatus shown in Figure 3. The apparatus according to Figure 4 may thus further comprise a collecting circuitry 41, a generating circuitry 42, a providing circuitry 43, and/or a deleting circuitry 44.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to further example embodiments, said collection job response includes said identifier of said job instance.

According to further example embodiments, said information on file uploading related to said data collection job includes information on a file availability notification subscription address.

According to a variation of the procedure shown in Figure 6, exemplary additional operations are given, which are inherently independent from each other as such. According to such variation, an exemplary method according to example embodiments may comprise an operation of receiving a file availability notification subscription for said data collection job created based on said file availability notification subscription address.

According to a variation of the procedure shown in Figure 6, exemplary additional operations are given, which are inherently independent from each other as such. According to such variation, an exemplary method according to example embodiments may comprise an operation of transmitting a file availability notification subscription acknowledgement including an identifier of said file availability notification subscription.

According to a variation of the procedure shown in Figure 6, exemplary additional operations are given, which are inherently independent from each other as such. According to such variation, said collection job request is indicative of a notification recipient address, and an exemplary method according to example embodiments may comprise an operation of creating a file availability notification subscription for said data collection job for said notification recipient address.

According to further example embodiments, said collection job response includes an identifier of said file availability notification subscription.

According to further example embodiments, said file availability notification subscription includes an identifier of a job instance representing said data collection job.

According to further example embodiments, said file availability notification subscription is implemented as a subscription instance created name-contained by said job instance, or a subscription instance created name-contained by a predetermined realm instance.

According to a variation of the procedure shown in Figure 6, exemplary additional operations are given, which are inherently independent from each other as such. According to such variation, an exemplary method according to example embodiments may comprise an operation of receiving a request for deletion of said file availability notification subscription, said request for deletion of said file availability notification subscription includes said identifier of said file availability notification subscription, and an operation of deleting said file availability notification subscription.

According to a variation of the procedure shown in Figure 6, exemplary additional operations are given, which are inherently independent from each other as such. According to such variation, an exemplary method according to example embodiments may comprise an operation of collecting data corresponding to said data collection job, an operation of generating a file to be uploaded based on said data, an operation of creating a file object instance representing said file, and an operation of transmitting a file availability notification based on said file availability notification subscription. Here, the file availability notification includes information on a file location of said file object instance.

According to further example embodiments, said file availability notification includes an identifier of a job instance representing said data collection job.

According to a variation of the procedure shown in Figure 6, exemplary additional operations are given, which are inherently independent from each other as such. According to such variation, an exemplary method according to example embodiments may comprise an operation of providing file content of said file and/or file meta data of said file at said file location.

According to further example embodiments, said collection job request is indicative of a requested file-based reporting with notifications.

According to further example embodiments, said information on file uploading related to said data collection job includes information on a file retrieval address.

According to a variation of the procedure shown in Figure 6, exemplary additional operations are given, which are inherently independent from each other as such. According to such variation, an exemplary method according to example embodiments may comprise an operation of collecting data corresponding to said data collection job, an operation of generating a file to be uploaded based on said data, an operation of creating a file object instance representing said file, an operation of receiving a query for information on available files from said file retrieval address, and an operation of transmitting said information on said available files including said file.

According to a variation of the procedure shown in Figure 6, exemplary additional operations are given, which are inherently independent from each other as such. According to such variation, said information on said available files includes information on a file location of a file object instance, and an exemplary method according to example embodiments may comprise an operation of providing file content of said file and/or file meta data of said file at said file location.

According to further example embodiments, said information on said available files includes an identifier of a job instance representing said data collection job associated with said file object instance representing said file generated based on data collected for said data collection job.

According to further example embodiments, said information on said available files includes file content of said available files and/or file meta data of said available files.

According to further example embodiments, said collection job request is indicative of a requested file-based reporting with polling.

According to a variation of the procedure shown in Figure 6, exemplary additional operations are given, which are inherently independent from each other as such. According to such variation, an exemplary method according to example embodiments may comprise an operation of receiving a request for deletion of a file object instance representing a file generated based on data collected for said data collection job, and an operation of deleting said file object instance.

Example embodiments outlined and specified above are explained below in more specific terms.

According to example embodiments, object instances are created, maintained and referenced, where the object instances represent files (potentially to be uploaded), and where the object instances are instances of an object following an information model as follows.

Namely, in particular, according to example embodiments, files that are available for upload on a MnS producer by a MnS consumer are modeled with instances of dedicated managed object classes (MOC).

A class name of the dedicated managed object classes is for example "File".

According to example embodiments, these objects can be name-contained by any other managed object such as those already specified in TS 28.622 and TS 28.541.

The "File" class definition includes attributes for meta-data describing the content of the file and an attribute indicating which data production job produced this file. According to example embodiments, the file content shall be retrieved using a normal Read operation on a "File" object. To this end, the object may have an attribute representing the content. According to example embodiments, reading this attribute returns the file content. It is noted in this regard that this attribute just represents the file content. The actual file may be stored elsewhere in a file system.

For grouping files sharing some common properties (for example, all files are related to a single job), according to example embodiments, a special collection class is introduced.

A class name of the collection class is for example "Files" (plural used to align with 3GPP naming conventions).

According to example embodiments, the "Files" class can be name-contained by any managed object and the "File" instances pertaining to the group are name-contained by "Files".

According to example embodiments, the "Files" class definition includes meta-data describing the collection of contained "File" instances such as the total number of files, the total size of all files, date and time of the last file removal or addition.

The name-containment relationship between the parent object of "File" or "Files" and the "File" or "Files" object itself shall have special semantics in the sense that it identifies the parent object as related to the files. The exact semantics depends on the parent object.

According to example embodiments, "Files" and "File" objects support the normal notifications for notifying object creation, object deletion and attribute value change. In addition or as alternative to an object creation notification, "File" objects may support the existing dedicated file ready notification reporting availability of the new file and all files, that became available before.

As mentioned above, according to example embodiments, the "File" class defines meta-data describing the file. The following data, already defined in TS 28.532, may be included as meta-data of a "File" class according to example embodiments:
- fileSize: Size of the uncompressed file.
- fileFormat: Reference to some file format definition.
- fileDataType: Indicating if the file contains measurements, KPIs, Trace data, etc.
- fileReadyTime Time at which the file became ready for retrieval, a special value indicates the file is not ready yet.
- fileExpirationTime: Time after which the MnS producer may delete the file.
- fileLocation: Location of the file. While such information is defined in TS 28.532, according to example embodiments it is preferred to not include such information as meta-data of a "File" class, as, if the file is presented by an object and the file can be retrieved using that object, it is not necessary anymore.
- fileCompression: Compression algorithm used for compressing the file. While such information is defined in TS 28.532, according to example embodiments it is preferred to not include such information as meta-data of a "File" class, as, when the compression algorithm can be negotiated using the file transfer protocol, which is the case with HTTP and HTTPS, it is not necessary anymore.

According to current known implementations/approaches as outlined above, information about which process is related to the generation of a file is not provided.

Such processes related to the generation of files include, for example,
- a process for producing performance metrics as defined by "PerfMetricJob" (TS 28.622), where the produced performance metrics are stored in a file that is made available for upload by MnS consumers,
- a process for producing trace data as defined by "TraceJob" (TS 28.622), where the produced trace data is stored in a file that is made available for upload by MnS consumers,
- a process for producing MDT data as defined by "TraceJob" (TS 28.622), where the produced MDT data is stored in a file that is made available for upload by MnS consumers, and
- a process for producing analytics data, where the produced analytics data is stored in a file that is made available for upload by MnS consumers (currently being standardized in 3GPP for Rel-17).

To include the information about the process related to files in the information model, thereby allowing a MnS consumer to get this information and especially to get only the information related to processes the MnS consumer is interested in, according to example embodiments, the "Files" or "File" objects are name-contained by the related job object.

Alternatively, to include the information about the process related to files in the information model, thereby allowing a MnS consumer to get this information and especially to get only the information related to processes the MnS consumer is interested in, according to example embodiments, the "Files" or "File" objects include a pointer attribute carrying the identifier of the related job or the identifiers of the related jobs.

Two properties are inherent to the first alternative according to example embodiments ("Files" or "File" objects are name-contained by the related job object). Namely, firstly, file objects can exist only when the parent job object exists. This ensures that files are deleted (assuming that files are deleted when the objects representing the files are deleted) when the job is deleted, thus preventing files that are of no use any more from piling up on MnS producers. Secondly, the file can relate to one job only, which might be a limiting factor.

When a file becomes available for upload on the MnS producer, according to example embodiments, the MnS producer creates a "File" object instance representing the new file, and notifies interested MnS consumers about the availability of the new file, assuming the MnS consumer has requested to be notified about new files. With the information model according to example embodiments illustrated above, a "notifyMOICreation" notification as defined in TS 28.532 serves the purpose. Alternatively, dedicated notification types can be specified for this event, with the same triggering event. According to example embodiments, as dedicated notification type the "notifyFileReady" notification defined in TS 28.532 is used, where the dedicated notification type the "notifyFileReady" notification is extended with parameters allowing identifying the related jobs, i.e. a pointer attribute holding the distinguished names (DN) of the related jobs.

No matter the notification type, 3GPP defined notifications contain always the same notification header, whose objectClass and objectInstance parameters shall be set to identify the new "File" object.

To receive notifications, MnS consumers need to create an appropriate subscription as usual. Based on the information model according to example embodiments illustrated above, subscriptions can be created that notify MnS consumers only about files that are related to jobs they created or they are interested in.

Depending on where the "File" objects are contained, the subscription looks different (assuming the "NtfSubscriptionControl" object defined in TS 28.622 is used for subscription, which is allowed to be contained only under "ManagedElement" and "SubNetwork"; and assuming, as well, the scope attribute is set in a way to encompass "File" objects):
- For the case where the "File" objects are contained below the job object, a filter needs to be specified that checks if the identifier (e.g. DN or Uniform Resource Identifier (URI)) of the related job instance is contained in the identifier of the "File" instance whose identifier is carried by the objectClass and objectInstance parameters of the notification header. If this filter construct evaluates to true, according to example embodiments, the notification is forwarded to the MnS consumer.
- For the case where the "File" object is not contained by the job object but by the "ManagedElement" or the "SubNetwork", the filter needs to be specified in a way to filter on the value of the notification parameter pointing to the related job. If this filter construct evaluates to true, according to example embodiments, the notification is forwarded to the MnS consumer.

According to example embodiments, the "NtfSubscriptionControl" object can be name-contained as well below job objects. This shall have the implicit semantics that the subscription is only related to objects of the subtree whose base object is the job object; hence to all "File" objects contained by the job object. This approach may work only for the case when "File" objects are contained by job objects. In this case, according to example embodiments, the following provisions are taken in the subscription:
- The filter attribute can be absent. The scope attribute settings need to encompass the "File" objects name-contained under the job object.

To create a subscription for notifications informing about the availability of files, the MnS consumer needs to know where these subscriptions need to be name-contained. Two known methods are imaginable for providing this information to the MnS consumer:
- The MnS consumer is configured with this information (not standardized in SA5), and
- The MnS consumer discovers this information (not standardized yet in SA5)

However, according to example embodiments, a much simpler and efficient approach is provided as follows:
- In detail, according thereto, the MnS producer includes this information in the response to a job creation request. This can be realized, for example, by adding a new attribute to each job class whose value is the address where the subscription creation request shall be sent. This attribute is absent in the job creation request and present (with value) in the response. In a Representational State Transfer (REST) application programming interface (API), this would map to a link object with two components: the URI and the information that this URI shall be used for creating subscriptions.

To retrieve files from MnS producers, MnS consumers need to know the exact location of a file, or the parent object (folder) where files are stored as children. The current approach in SA5 allows reporting the exact location in the "notifyFileRead" notification announcing a file is available for upload. The exact location is also contained in the "listAvailableFiles" operation response. When neither the "notifyFileRead" notification nor the "listAvailableFiles" operation are implemented, the MnS consumer has no way to find out in a standardized manner the location of the parent object below which files are stored and where he can poll for available files.

Two proprietary workarounds are imaginable such as:
- The MnS consumer is configured with this information, and
- The MnS consumer discovers this information.

According to example embodiments, a much simpler and efficient approach is provided as follows:
- In detail, according thereto, the MnS producer includes this information in the response to a job creation request. This can be realized for example by adding a new attribute to each job class whose value is the address of the parent object of the files (e.g. the URI of the "Files" object, or the URI of a job object). This attribute is absent in the job creation request and present (with value) in the response. In a REST API, this would map to a link object with two components: the URI and the information that this URI shall be used for retrieving files that are child objects.

According to example embodiments, in the job class definition it is also included an attribute allowing the MnS consumer to request, when selecting the file based reporting method, to be notified about new files with notifications (file-based reporting method with notifications) or not. Further, according to example embodiments, if the MnS consumer does not request to be notified about new files with notifications (file-based reporting method with notifications), the MnS consumer will poll the MnS producer instead for new files (file-based reporting method with polling).

According to example embodiments, further, a mechanism is provided for implicit subscription creation by the MnS producer. Namely, according thereto, when the MnS consumer requests the MnS to create a job and selects file based reporting with notifications, the sent request message may include as well an indication to the MnS producer to create the required subscription on behalf of the MnS consumer (implicit subscription). In this case, according to example embodiments, MnS consumer includes the notification recipient address in the request message. The presence of the notification recipient address may be used as implicit indication to create the subscription. The subscription is only related to notifications reporting the availability of files related to the job that the MnS consumer requests to be created.

Implicit subscriptions are especially beneficial for simple MnS consumers that support only requests for the creation of single objects (and hence cannot combine the request for creating a job and a subscription into a single request) and that shall be shielded from the complexities of how to create a subscription (i.e., including complexities regarding knowledge of the parent objects, below which it is possible to create a subscription, knowledge about properly forming of a request for creating a subscription, and knowledge about proper population of all attributes in the request with values).

According to example embodiments, further, a mechanism to decouple the address of the "File" object representing a file and the address where the file can be retrieved if provided by including a file location attribute in the "File" object. Typically, these addresses are identical, especially when the same protocol is used for file transfer and object manipulations. However, there are also deployments where the addresses might not be identical, for example when different protocols are used for file transfer and object manipulation or when the files are stored on a dedicated file server. To deal with this situation, according to example embodiments, the "File" class contains a "fileLocation" attribute with the complete address of the file location.

For example, the URI of the "File" object might be
"https://example.com/3gppManagement/Files=1/File=1"
and the value of the file location might be
"sftp://example.com/3gppManagement/Files=1/File=1"

In another example, the URI of the "File" might be
https://example.com/5GNB=125/PerfMetricJob=5/File=1
and the file location might be
   https://192.10.2.3:8000/fileRepository/perfFiles/A20210421.2315+0 200-2330+0200_job25_gnb125
or the file location might be
   sftp://192.10.2.3:8000/fileRepository/perfFiles/A20210421.2315+02 00-2330+0200_job25_gnb125

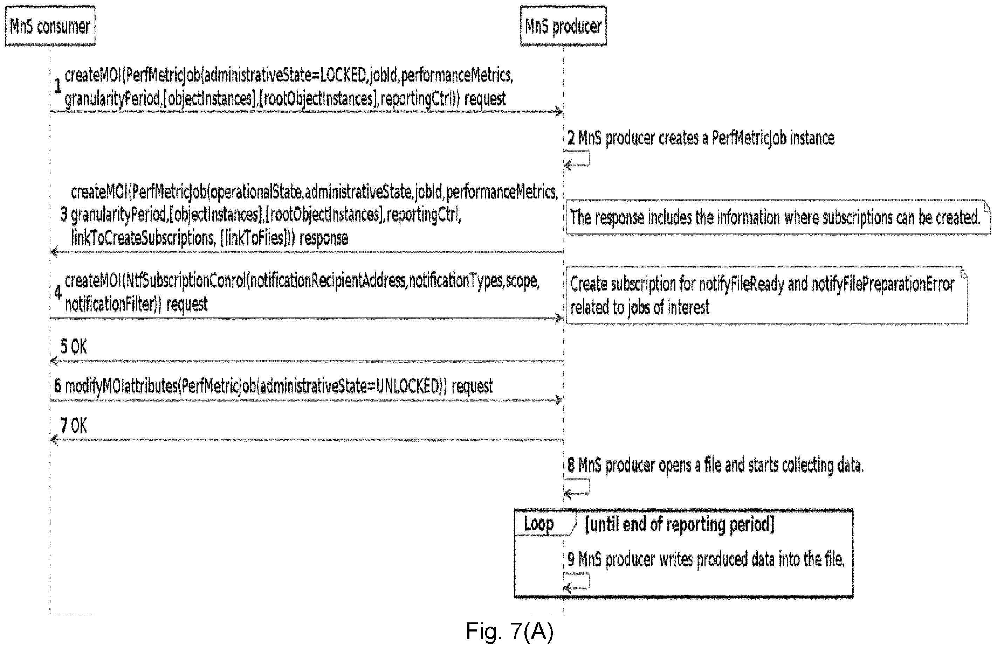

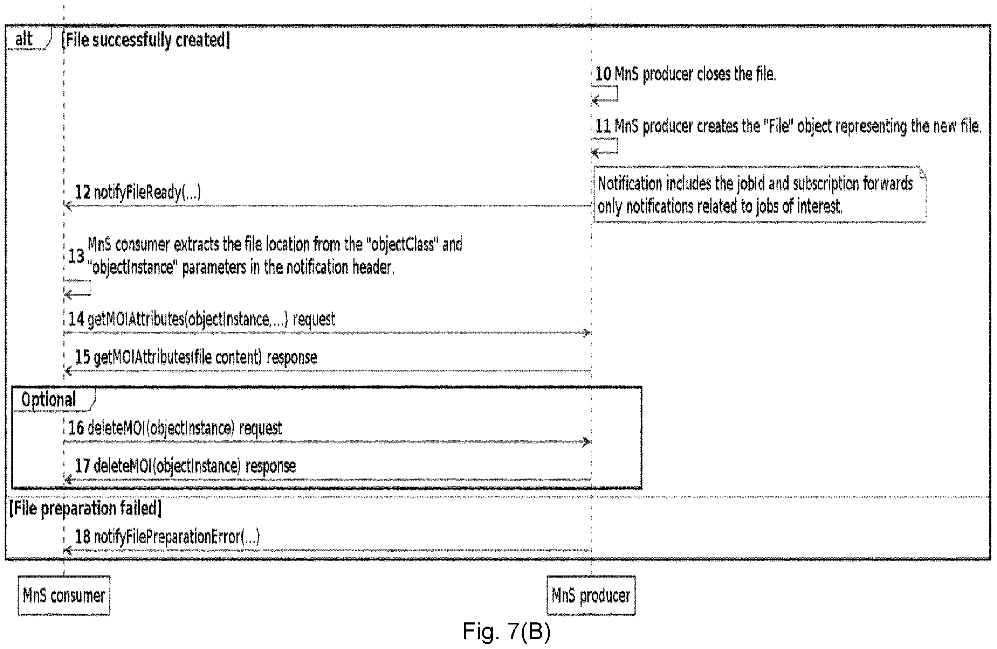

Figure 7 (Figures 7(A) and 7(B), where Figure 7(B) is a continuation of Figure 7(A)) shows a schematic diagram of signaling sequences according to example embodiments, and in particular illustrates an example procedure for requesting and retrieving data using notifications (without implicit subscription) based on the above explained information model according to example embodiments.

In a step 1 of Figure 7, according to example embodiments, the MnS consumer sends a job creation request to the MnS producer. In the request, the administrative state attribute of the job is set to "locked" and the reporting method to "file-based reporting with notifications".

In a step 2 of Figure 7, according to example embodiments, the MnS producer creates the job instance and generates an identifier (DN) for the new resource.

In a step 3 of Figure 7, according to example embodiments, the MnS producer sends the job creation response to the MnS consumer that includes the identifier of the new resource, and information about where the MnS consumer can create the subscription for notifications on the availability of new files.

In a step 4 of Figure 7, according to example embodiments, the MnS consumer creates a subscription for notifications reporting the availability of files with "his" data. To make sure this subscription is only for notifications relating to jobs created by, or of interest to, the MnS consumer, according to example embodiments, the MnS consumer has three possibilities, whose selection is governed by where subscriptions can be created by MnS consumers and where the MnS producer creates "File" objects:
a. ["File" objects are created below job objects, subscription objects are created below job objects]:
   The MnS consumer creates a subscription object name-contained by the job object. The scope attribute shall be set in a way to encompass all "File" objects below the job object. The notification filter attribute of the subscription can be absent.
b. ["File" objects are created below job objects, subscription objects are created below "ManagedElement" or "SubNetwork"]:
   The MnS consumer creates a subscription object name-contained by "ManagedElement" or "SubNetwork". The scope attribute shall be set in a way to encompass all "File" objects. The notification filter attribute of the subscription shall filter on the objectInstance attribute of the notification header (that carries the objectInstance of the new "File" object) and evaluate to true if this objectInstance (DN) contains the objectInstance (DN) of the job of interest. Alternatively, the notification filter attribute of the subscription can filter on the jobs parameter in the notification body.
c. ["File" objects are not created below job objects, subscription objects are created below "ManagedElement" or "SubNetwork"]:
   The MnS consumer creates a subscription object name-contained by "ManagedElement" or "SubNetwork". The scope attribute shall be set in a way to encompass all "File" objects. The notification filter attribute of the subscription shall filter on the jobs parameter in the notification body.

In a step 5 of Figure 7, according to example embodiments, the MnS producer acknowledges the creation of the subscription by sending a creation request response to the MnS consumer.

In a step 6 of Figure 7, according to example embodiments, the MnS consumer sets the administrative state of the job on the MnS producer to "unlocked".

In a step 7 of Figure 7, according to example embodiments, the MnS producer sends a response to the MnS consumer to acknowledge the attribute value change.

In a step 8 of Figure 7, according to example embodiments, the MnS producer opens a file and starts collecting data.

In a step 9 of Figure 7, according to example embodiments, the MnS producer writes the produced data into the file until the end of the reporting period is reached.

In a step 10 of Figure 7, according to example embodiments, the MnS producer closes the file.

In a step 11 of Figure 7, according to example embodiments, the MnS producer creates a "File" object representing the new file.

In a step 12 of Figure 7, according to example embodiments, the MnS producer emits a notification to report availability of the file.

In a step 13 of Figure 7, upon reception of the notification, according to example embodiments, the MnS consumer extracts the file location from the "objectInstance" parameters in the notification header. According to example embodiments, it is also possible that the notification contains a dedicated file location parameter in the notification body specifying a location potentially different from the location defined by the "objectInstance" parameters in the notification header.

In a step 14 of Figure 7, according to example embodiments, the MnS consumer sends a read request to the extracted location whilst specifying the file content shall be returned, or the meta data and the file content.

In a step 15 of Figure 7, according to example embodiments, the MnS producer responds with the file content or the file content and the file meta data.

In a step 16 of Figure 7, after retrieval of the file, according to example embodiments, the MnS consumer may ask the MnS producer to delete the file by deleting the corresponding "File" object.

In a step 17 of Figure 7, according to example embodiments, the MnS producer acknowledges that the "File" object was deleted (after deletion).

In a step 18 of Figure 7, according to example embodiments, if file preparation has failed, a corresponding notification is sent to the MnS consumer.

Alternatively, in step 1 of Figure 7, according to example embodiments, the MnS consumer sends a job creation request to the MnS producer. In the request, the administrative state attribute of the job is set to "locked" and the reporting method to "file-based reporting with notifications". Besides that, the request includes an indication to create a subscription on behalf of the MnS consumer by the MnS producer (referred to herein as implicit subscription). This indication may be embodied by an included notification recipient address. According to this alternative, in step 2 of Figure 7, according to example embodiments, the MnS producer creates not only the job instance and generates not only an identifier (DN) for the new resource, but, based on the indication to create a subscription (implicit subscription), also creates a subscription for notifications reporting the availability of files with the MnS consumers data (following the principles explained for step 4 of Figure 7) on its own, and generates an identifier for the (implicit) subscription. According to this alternative, in step 3 of Figure 7, according to example embodiments, the MnS producer sends the job creation response to the MnS consumer that includes the identifier of the new resource (job). The job creation response does not include information about where the MnS consumer can create the subscription for notifications on the availability of new files. Instead, the job creation response may include the generated identifier of the (implicit) subscription. According to this alternative, step 6 of Figure 7 is performed while omitting steps 4 and 5 shown in Figure 7, i.e., according to example embodiments, subsequently to receipt of the job creation response (step 3 of Figure 7), the MnS consumer sets the administrative state of the job on the MnS producer to "unlocked", and the procedure of this alternative follows the further steps of Figure 7.

According to example embodiments, the MnS consumer may ask the MnS producer to delete a subscription (by stating the identifier of the subscription) Further, according to example embodiments, the MnS producer may delete the identified subscription accordingly.

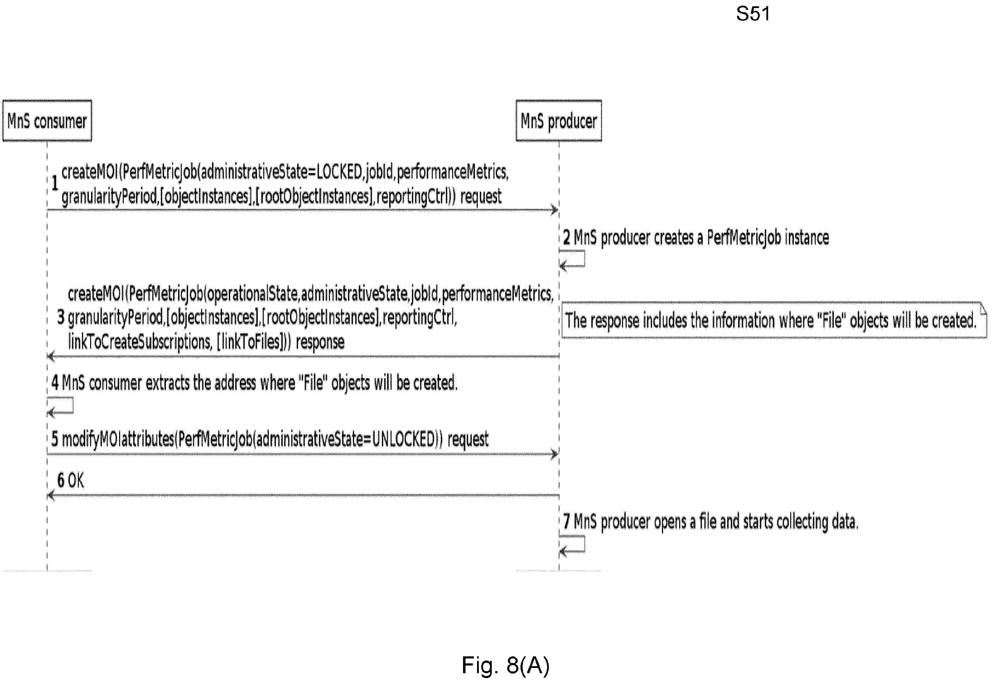

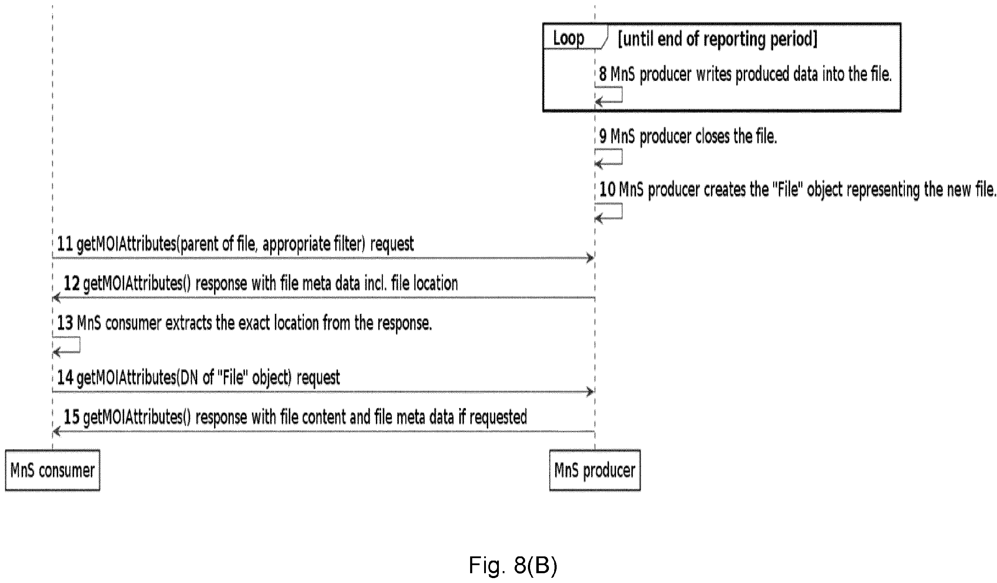

Figure 8 (Figures 8(A) and 8(B), where Figure 8(B) is a continuation of Figure 8(A)) shows a schematic diagram of signaling sequences according to example embodiments, and in particular illustrates an example procedure for requesting and retrieving data using polling based on the above explained information model according to example embodiments.

In a step 1 of Figure 8, according to example embodiments, the MnS consumer sends a job creation request to the MnS producer. In the request, the administrative state attribute of the job is set to "locked" and the reporting method to "file-based reporting with polling". According to example embodiments, the MnS consumer has specified the reporting period in the request and the MnS consumer can determine from that information when files should become available on the MnS producer.

In a step 2 of Figure 8, according to example embodiments, the MnS producer creates the job instance and generates an identifier (DN) for the new resource.

In a step 3 of Figure 8, according to example embodiments, the MnS producer sends a response to the MnS consumer that includes the DN of the new resource, and information about where the MnS producer will create the files (e.g. a pointer to the parent resource where "File" objects will be created as children).

In a step 4 of Figure 8, according to example embodiments, the MnS consumer extracts the address where "File" objects will be created.

In a step 5 of Figure 8, according to example embodiments, the MnS consumer sets the administrative state of the job on the MnS producer to "unlocked".

In a step 6 of Figure 8, according to example embodiments, the MnS producer sends a response to the MnS consumer to acknowledge the attribute value change.

In a step 7 of Figure 8, according to example embodiments, the MnS producer opens a file and starts collecting data.

In a step 8 of Figure 8, according to example embodiments, the MnS producer writes the produced data into the file until the end of the reporting period is reached. Namely, according to example embodiments, the MnS consumer has specified the reporting period in the request indicating when files should become available on the MnS producer.

In a step 9 of Figure 8, according to example embodiments, the MnS producer closes the file.

In a step 10 of Figure 8, according to example embodiments, the MnS producer creates a "File" object representing the new file.

In a step 11 of Figure 8, the MnS consumer reads information about available files from the MnS producer using the address returned in the job creation request. Namely, according to example embodiments, the MnS consumer has specified the reporting period in the request and the MnS consumer can determine from that information when files should become available on the MnS producer. With the above explained information model according to example embodiments, this procedure becomes a straightforward normal read operation with query parameters to limit the set of returned file meta data to information about files the MnS consumer is interested in.

In a step 12 of Figure 8, according to example embodiments, the MnS producer sends a response with requested file meta data to the MnS consumer. It includes the exact location of the files.

In a step 13 of Figure 8, according to example embodiments, the MnS consumer extracts the exact location from the response.

In a step 14 of Figure 8, according to example embodiments, the MnS consumer sends a read request to the extracted location whilst specifying the file content shall be returned, or the file meta data and the file content.

In a step 15 of Figure 8, according to example embodiments, the MnS producer responds with the file content or the file content and the file meta data.

Alternatively, in step 11 of Figure 8, according to example embodiments, the MnS consumer may specify that the MnS producer shall not only include file meta data but also the file content. With that, one read request is sufficient. In other words, according to this alternative, without performing steps 12 to 14 of Figure 8, in step 15 of Figure 8, the MnS producer responds with the file content or the file content and the file meta data.

In the same way as in the processing illustrated in Figure 7, although not shown in Figure 8, also in the processing illustrated in Figure 8, after retrieval of the file, according to example embodiments, the MnS consumer may ask the MnS producer to delete the file by deleting the corresponding "File" object. Further, according to example embodiments, the MnS producer acknowledges that the "File" object was deleted (after deletion).

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

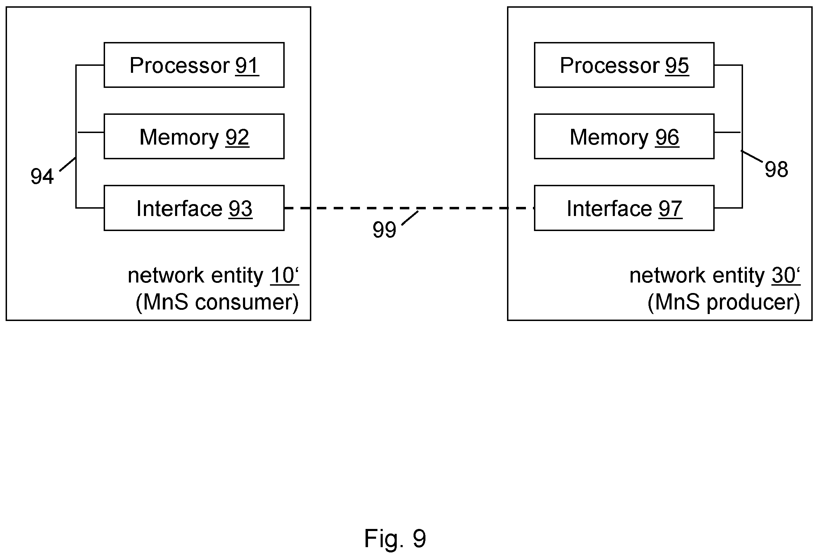

In Figure 9, an alternative illustration of apparatuses according to example embodiments is depicted. As indicated in Figure 9, according to example embodiments, the apparatus (network entity) 10' (corresponding to the network entity 10) comprises a processor 91, a memory 92 and an interface 93, which are connected by a bus 94 or the like. Further, according to example embodiments, the apparatus (network entity) 30' (corresponding to the network entity 30) comprises a processor 95, a memory 96 and an interface 97, which are connected by a bus 98 or the like, and the apparatuses may be connected via link 99, respectively.

The processor 91/95 and/or the interface 93/97 may also include a modem or the like to facilitate communication over a (hardwire or wireless) link, respectively. The interface 93/97 may include a suitable transceiver coupled to one or more antennas or communication means for (hardwire or wireless) communications with the linked or connected device(s), respectively. The interface 93/97 is generally configured to communicate with at least one other apparatus, i.e. the interface thereof.

The memory 92/96 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network entity 10 comprises at least one processor 91, at least one memory 92 including computer program code, and at least one interface 93 configured for communication with at least another apparatus. The processor (i.e. the at least one processor 91, with the at least one memory 92 and the computer program code) is configured to perform transmitting a collection job request requesting a data collection job (thus the apparatus comprising corresponding means for transmitting), and to perform receiving a collection job response (thus the apparatus comprising corresponding means for receiving). Here, the collection job response includes information on file uploading related to said data collection job.

According to example embodiments, an apparatus representing the network entity 30 comprises at least one processor 95, at least one memory 96 including computer program code, and at least one interface 97 configured for communication with at least another apparatus. The processor (i.e. the at least one processor 95, with the at least one memory 96 and the computer program code) is configured to perform receiving a collection job request requesting a data collection job (thus the apparatus comprising corresponding means for receiving), to perform creating a job instance representing said data collection job (thus the apparatus comprising corresponding means for creating), and to perform transmitting a collection job response (thus the apparatus comprising corresponding means for transmitting). Here, the collection job response includes information on file uploading related to said data collection job.

For further details regarding the operability/functionality of the individual apparatuses, reference is made to the above description in connection with any one of Figures 1 to 8, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for file upload management. Such measures exemplarily comprise transmitting a collection job request requesting a data collection job, and receiving a collection job response, wherein said collection job response includes information on file uploading related to said data collection job.

### List of acronyms and abbreviations

- CRUD: create, read, update, delete
- DN: distinguished name
- FTP: file transfer protocol
- HTTP: hypertext transfer protocol
- HTTPS: hypertext transfer protocol secure
- ID: identifier
- KPI: key performance indicator
- MDT: minimization of drive tests
- MnF: management function
- MnS: management service
- MOC: managed object classes
- NF: network function
- SBMA: service based management architecture
- SFTP: secure file transfer protocol
- TS: Technical Specification
- URI: Uniform Resource Identifier

## Claims

1. An apparatus (10) comprising
transmitting circuitry (11) configured to transmit a collection job request requesting a data collection job, and
receiving circuitry (12) configured to receive a collection job response,
**characterized in that**
said collection job response includes information on file uploading related to said data collection job.

2. The apparatus (10) according to claim 1, wherein
said collection job response includes an identifier of a job instance representing said data collection job.

3. The apparatus (10) according to claim 1 or 2, wherein
said information on file uploading related to said data collection job includes information on a file availability notification subscription address,
and optionally further comprising
creating circuitry (21) configured to create a file availability notification subscription for said data collection job based on said file availability notification subscription address, and
transmitting circuitry (11) configured to transmit said file availability notification subscription,
and optionally wherein
said file availability notification subscription includes an identifier of a job instance representing said data collection job,
and optionally further comprising
creating circuitry (21) configured to create a subscription instance name-contained by said job instance, or
creating circuitry (21) configured to create a subscription instance name-contained by a predetermined realm instance,
and optionally further comprising
receiving circuitry (12) configured to receive a file availability notification subscription acknowledgement including an identifier of said file availability notification subscription.

4. The apparatus (10) according to claim 1 or 2, wherein
said collection job request is indicative of a notification recipient address,
and optionally wherein
said collection job response includes an identifier of a file availability notification subscription created in response to said notification recipient address.

5. The apparatus (10) according to any of claims 3 to **4,** wherein
said collection job request is indicative of a requested file-based reporting with notifications.

6. The apparatus (10) according to claim 1 or 2, wherein
said information on file uploading related to said data collection job includes information on a file retrieval address,
and optionally further comprising
querying circuitry (23) configured to query information on available files from said file retrieval address, and
receiving circuitry (12) configured to receive said information on said available files,
and optionally wherein
said information on said available files includes information on a file location of a file object instance representing a file generated based on data collected for said data collection job, and the apparatus further comprises
retrieving circuitry (22) configured to retrieve file content of said file and/or file meta data of said file from said file location,
and optionally wherein
said information on said available files includes an identifier of a job instance representing said data collection job associated with said file object instance representing said file generated based on data collected for said data collection job,
and optionally wherein
said information on said available files includes file content of said available files and/or file meta data of said available files.

7. The apparatus (10) according to claim 6, wherein
said collection job request is indicative of a requested file-based reporting with polling.

8. An apparatus (30) comprising
receiving circuitry (31) configured to receive a collection job request requesting a data collection job,
creating circuitry (32) configured to create a job instance representing said data collection job, and
transmitting circuitry (33) configured to transmit a collection job response,
**characterized in that**
said collection job response includes information on file uploading related to said data collection job.

9. The apparatus (30) according to claim 8, wherein
said collection job response includes said identifier of said job instance.

10. The apparatus (30) according to claim 8 or 9, wherein
said information on file uploading related to said data collection job includes information on a file availability notification subscription address,
and optionally further comprising
receiving circuitry (31) configured to receive a file availability notification subscription for said data collection job created based on said file availability notification subscription address,
and optionally further comprising
transmitting circuitry (33) configured to transmit a file availability notification subscription acknowledgement including an identifier of said file availability notification subscription.

11. The apparatus (30) according to claim 8 or 9, wherein
said collection job request is indicative of a notification recipient address, and the apparatus further comprises
creating circuitry (32) configured to create a file availability notification subscription for said data collection job for said notification recipient address,
and optionally wherein
said collection job response includes an identifier of said file availability notification subscription.

12. The apparatus (30) according to any of claims 10 to 11, wherein
said collection job request is indicative of a requested file-based reporting with notifications.

13. The apparatus (30) according to claim 8 or 9, wherein
said information on file uploading related to said data collection job includes information on a file retrieval address,
and optionally further comprising
collecting circuitry (41) configured to collect data corresponding to said data collection job,
generating circuitry (42) configured to generate a file to be uploaded based on said data,
creating circuitry (32) configured to create a file object instance representing said file,
receiving circuitry (31) configured to receive a query for information on available files from said file retrieval address, and
transmitting circuitry (33) configured to transmit said information on said available files including said file,
and optionally wherein
said information on said available files includes information on a file location of a file object instance, and the apparatus further comprises
providing circuitry (43) configured to provide file content of said file and/or file meta data of said file at said file location,
and optionally wherein
said information on said available files includes an identifier of a job instance representing said data collection job associated with said file object instance representing said file generated based on data collected for said data collection job,
and optionally wherein
said information on said available files includes file content of said available files and/or file meta data of said available files.

14. The apparatus (30) according to claim 13, wherein
said collection job request is indicative of a requested file-based reporting with polling.

15. A method comprising
transmitting (S51) a collection job request requesting a data collection job, and
receiving (S52) a collection job response, wherein
said collection job response includes information on file uploading related to said data collection job,
or comprising
receiving (S61) a collection job request requesting a data collection job,
creating (S62) a job instance representing said data collection job, and
transmitting (S63) a collection job response, wherein
said collection job response includes information on file uploading related to said data collection job.

## Patentansprüche

1. Vorrichtung (10), die Folgendes umfasst
eine Übertragungsschaltung (11), die dazu ausgelegt ist, eine Sammelaufgabenanforderung zu übertragen, die eine Datensammelaufgabe anfordert, und
eine Empfangsschaltung (12), die dazu ausgelegt ist, eine Sammelaufgabenantwort zu empfangen,
**dadurch gekennzeichnet, dass**
die Sammelaufgabenantwort Informationen zum Hochladen von Dateien beinhaltet, die sich auf die Datensammelaufgabe beziehen.

2. Vorrichtung (10) nach Anspruch 1, wobei
die Sammelaufgabenantwort eine Kennung einer Aufgabeninstanz beinhaltet, die die Datensammelaufgabe repräsentiert.

3. Vorrichtung (10) nach Anspruch 1 oder 2, wobei
die Informationen zum Hochladen von Dateien, die sich auf die Datensammelaufgabe beziehen, Informationen über eine Subskriptionsadresse für eine Benachrichtigung über eine Dateiverfügbarkeit beinhalten,
und die ferner wahlweise Folgendes umfasst
eine Erstellungsschaltung (21), die dazu ausgelegt ist, eine Subskription für eine Benachrichtigung über eine Dateiverfügbarkeit für die Datensammelaufgabe auf Basis der Subskriptionsadresse für eine Benachrichtigung über eine Dateiverfügbarkeit zu erstellen, und
eine Übertragungsschaltung (11), die dazu ausgelegt ist, die Subskription für eine Benachrichtigung über eine Dateiverfügbarkeit zu übertragen,
und wahlweise wobei
die Subskription für eine Benachrichtigung über eine Dateiverfügbarkeit eine Kennung einer Aufgabeninstanz beinhaltet, die die Datensammelaufgabe repräsentiert,
und die ferner wahlweise Folgendes umfasst
eine Erstellungsschaltung (21), die dazu ausgelegt ist, einen Subskriptionsinstanznamen zu erstellen, der in der Aufgabeninstanz enthalten ist, oder
eine Erstellungsschaltung (21), die dazu ausgelegt ist, einen Subskriptionsinstanznamen zu erstellen, der in einer vorbestimmten Gebietsinstanz enthalten ist,
und die ferner wahlweise Folgendes umfasst
eine Empfangsschaltung (12), die dazu ausgelegt ist, eine Subskriptionsbestätigung für eine Benachrichtigung über eine Dateiverfügbarkeit zu empfangen, die eine Kennung der Subskription für eine Benachrichtigung über eine Dateiverfügbarkeit beinhaltet.

4. Vorrichtung (10) nach Anspruch 1 oder 2, wobei
die Sammelaufgabenanforderung eine Benachrichtigungsempfängeradresse anzeigt,
und wahlweise wobei
die Sammelaufgabenantwort eine Kennung einer Subskription für eine Benachrichtigung über eine Dateiverfügbarkeit beinhaltet, die in Reaktion auf die Benachrichtigungsempfängeradresse erstellt wurde.

5. Vorrichtung (10) nach einem der Ansprüche 3 bis 4, wobei
die Sammelaufgabenanforderung eine angeforderte dateibasierte Meldung mit Benachrichtigungen anzeigt.

6. Vorrichtung (10) nach Anspruch 1 oder 2, wobei
die Informationen zum Hochladen von Dateien, die sich auf die Datensammelaufgabe beziehen, Informationen über eine Dateiabrufadresse beinhalten,
und die ferner wahlweise Folgendes umfasst
eine Anfragenschaltung (23), die dazu ausgelegt ist, Informationen über verfügbare Dateien bei der Dateiabrufadresse anzufragen, und
eine Empfangsschaltung (12), die dazu ausgelegt ist, die Informationen über die verfügbaren Dateien zu empfangen,
und wahlweise wobei
die Informationen über die verfügbaren Dateien Informationen über einen Dateistandort einer Dateiobjektinstanz beinhalten, die eine Datei repräsentiert, die auf Basis von Daten erzeugt wird, die für die Datensammelaufgabe gesammelt werden, und die Vorrichtung ferner Folgendes umfasst
eine Abrufschaltung (22), die dazu ausgelegt ist, einen Dateiinhalt der Datei und/oder Dateimetadaten der Datei vom Dateistandort abzurufen,
und wahlweise wobei
die Informationen über die verfügbaren Dateien eine Kennung einer Aufgabeninstanz beinhalten, die die Datensammelaufgabe repräsentiert, die mit der Dateiobjektinstanz verknüpft ist, die die Datei repräsentiert, die auf Basis von Daten erzeugt wurde, die für die Datensammelaufgabe gesammelt wurden,
und wahlweise wobei
die Informationen über die verfügbaren Dateien einen Dateiinhalt der verfügbaren Dateien und/oder Dateimetadaten der verfügbaren Dateien beinhalten.

7. Vorrichtung (10) nach Anspruch 6, wobei
die Sammelaufgabenanforderung eine angeforderte dateibasierte Meldung mit einer Abfrage anzeigt.

8. Vorrichtung (30), die Folgendes umfasst
eine Empfangsschaltung (31), die dazu ausgelegt ist, eine Sammelaufgabenanforderung zu empfangen, die eine Datensammelaufgabe anfordert,
eine Erstellungsschaltung (32), die dazu ausgelegt ist, eine Aufgabeninstanz zu erstellen, die die Datensammelaufgabe repräsentiert, und
eine Übertragungsschaltung (33), die dazu ausgelegt ist, eine Sammelaufgabenantwort zu übertragen,
**dadurch gekennzeichnet, dass**
die Sammelaufgabenantwort Informationen zum Hochladen von Dateien beinhaltet, die sich auf die Datensammelaufgabe beziehen.

9. Vorrichtung (30) nach Anspruch 8, wobei
die Sammelaufgabenantwort die Kennung der Aufgabeninstanz beinhaltet.

10. Vorrichtung (30) nach Anspruch 8 oder 9, wobei
die Informationen zum Hochladen von Dateien, die sich auf die Datensammelaufgabe beziehen, Informationen über eine Subskriptionsadresse für eine Benachrichtigung über eine Dateiverfügbarkeit beinhalten,
und die ferner wahlweise Folgendes umfasst
eine Empfangsschaltung (31), die dazu ausgelegt ist, eine Subskription für eine Benachrichtigung über eine Dateiverfügbarkeit für die Datensammelaufgabe zu empfangen, die auf Basis der Subskriptionsadresse für eine Benachrichtigung über eine Dateiverfügbarkeit erstellt wurde,
und die ferner wahlweise Folgendes umfasst
eine Übertragungsschaltung (33), die dazu ausgelegt ist, eine Subskriptionsbestätigung für eine Benachrichtigung über eine Dateiverfügbarkeit zu übertragen, die eine Kennung der Subskription für eine Benachrichtigung über eine Dateiverfügbarkeit beinhaltet.

11. Vorrichtung (30) nach Anspruch 8 oder 9, wobei
die Sammelaufgabenanforderung eine Benachrichtigungsempfängeradresse anzeigt und die Vorrichtung ferner Folgendes umfasst
eine Erstellungsschaltung (32), die dazu ausgelegt ist, eine Subskription für eine Benachrichtigung über eine Dateiverfügbarkeit für die Datensammelaufgabe für die Benachrichtigungsempfängeradresse zu erstellen,
und wahlweise wobei
die Sammelaufgabenantwort die Kennung der Subskription für eine Benachrichtigung über eine Dateiverfügbarkeit beinhaltet.

12. Vorrichtung (30) nach einem der Ansprüche 10 bis 11, wobei
die Sammelaufgabenanforderung eine angeforderte dateibasierte Meldung mit Benachrichtigungen anzeigt.

13. Vorrichtung (30) nach Anspruch 8 oder 9, wobei
die Informationen zum Hochladen von Dateien, die sich auf die Datensammelaufgabe beziehen, Informationen über eine Dateiabrufadresse beinhalten,
und die ferner wahlweise Folgendes umfasst
eine Sammelschaltung (41), die dazu ausgelegt ist, Daten zu sammeln, die der Datensammelaufgabe entsprechen,
eine Erzeugungsschaltung (42), die dazu ausgelegt ist, eine Datei zu erzeugen, die auf Basis der Daten hochzuladen ist,
eine Erstellungsschaltung (32), die dazu ausgelegt ist, eine Dateiobjektinstanz zu erstellen, die die Datei repräsentiert,
eine Empfangsschaltung (31), die dazu ausgelegt ist, eine Anfrage für Informationen über verfügbare Dateien von der Dateiabrufadresse zu empfangen, und
eine Übertragungsschaltung (33), die dazu ausgelegt ist, die Informationen über die verfügbaren Dateien, die die Datei beinhalten, zu übertragen,
und wahlweise wobei
die Informationen über die verfügbaren Dateien Informationen über einen Dateistandort einer Dateiobjektinstanz beinhalten, und die Vorrichtung ferner Folgendes umfasst
eine Bereitstellungsschaltung (43), die dazu ausgelegt ist, einen Dateiinhalt der Datei und/oder Dateimetadaten der Datei am Dateistandort bereitzustellen,
und wahlweise wobei
die Informationen über die verfügbaren Dateien eine Kennung einer Aufgabeninstanz beinhalten, die die Datensammelaufgabe repräsentiert, die mit der Dateiobjektinstanz verknüpft ist, die die Datei repräsentiert, die auf Basis von Daten erzeugt wurde, die für die Datensammelaufgabe gesammelt wurden,
und wahlweise wobei
die Informationen über die verfügbaren Dateien einen Dateiinhalt der verfügbaren Dateien und/oder Dateimetadaten der verfügbaren Dateien beinhalten.

14. Vorrichtung (30) nach Anspruch 13, wobei
die Sammelaufgabenanforderung eine angeforderte dateibasierte Meldung mit einer Abfrage anzeigt.

15. Verfahren, das Folgendes umfasst
Übertragen (S51) einer Sammelaufgabenanforderung, die eine Datensammelaufgabe anfordert, und
Empfangen (S52) einer Sammelaufgabenantwort, wobei
die Sammelaufgabenantwort Informationen zum Hochladen von Dateien beinhaltet, die sich auf die Datensammelaufgabe beziehen,
oder das Folgendes umfasst
Empfangen (S61) einer Sammelaufgabenanforderung, die eine Datensammelaufgabe anfordert,
Erstellen (S62) einer Aufgabeninstanz, die die Datensammelaufgabe repräsentiert, und
Übertragen (S63) einer Sammelaufgabenantwort, wobei
die Sammelaufgabenantwort Informationen zum Hochladen von Dateien beinhaltet, die sich auf die Datensammelaufgabe beziehen.

## Revendications

1. Appareil (10) comprenant
une circuiterie de transmission (11) configurée pour transmettre une demande de travail de collecte demandant un travail de collecte de données, et
une circuiterie de réception (12) configurée pour recevoir une réponse de travail de collecte,
**caractérisé en ce que**
ladite réponse de travail de collecte comporte des informations sur le téléchargement de fichiers lié audit travail de collecte de données.

2. Appareil (10) selon la revendication 1, dans lequel ladite réponse de travail de collecte comporte un identifiant d'une instance de travail représentant ledit travail de collecte de données.

3. Appareil (10) selon la revendication 1 ou 2, dans lequel
lesdites informations sur le téléchargement de fichiers lié audit travail de collecte de données comportent des informations sur une adresse d'abonnement de notification de disponibilité de fichier,
et facultativement, comprenant en outre
une circuiterie de création (21) configurée pour créer un abonnement de notification de disponibilité de fichier pour ledit travail de collecte de données sur la base de ladite adresse d'abonnement de notification de disponibilité de fichier, et
une circuiterie de transmission (11) configurée pour transmettre ledit abonnement de notification de disponibilité de fichier,
et facultativement dans lequel
ledit abonnement de notification de disponibilité de fichier comporte un identifiant d'une instance de travail représentant ledit travail de collecte de données,
et facultativement comprenant en outre
une circuiterie de création (21) configurée pour créer un nom d'instance d'abonnement contenu dans ladite instance de travail, ou
une circuiterie de création (21) configurée pour créer un nom d'instance d'abonnement contenu dans une instance de domaine prédéterminée,
et facultativement comprenant en outre
une circuiterie de réception (12) configurée pour recevoir un accusé de réception d'abonnement de notification de disponibilité de fichier comportant un identifiant dudit abonnement de notification de disponibilité de fichier.

4. Appareil (10) selon la revendication 1 ou 2, dans lequel
ladite demande de travail de collecte indique une adresse de destinataire de notification,
et facultativement dans lequel
ladite réponse de travail de collecte comporte un identifiant d'un abonnement de notification de disponibilité de fichier créé en réponse à ladite adresse de destinataire de notification.

5. Appareil (10) selon l'une des revendications 3 et 4, dans lequel
ladite demande de travail de collecte indique un rapport demandé basé sur fichier avec des notifications.

6. Appareil (10) selon la revendication 1 ou 2, dans lequel
lesdites informations sur le téléchargement de fichiers lié audit travail de collecte de données comportent des informations sur une adresse de récupération de fichiers,
et facultativement comprenant en outre
une circuiterie de requête (23) configurée pour requérir des informations sur les fichiers disponibles à partir de ladite adresse de récupération de fichiers, et
une circuiterie de réception (12) configurée pour recevoir lesdites informations sur lesdits fichiers disponibles,
et facultativement dans lequel
lesdites informations sur lesdits fichiers disponibles comportent des informations sur un emplacement de fichier d'une instance d'objet de fichier représentant un fichier généré sur la base des données collectées pour ledit travail de collecte de données, et l'appareil comprend en outre
une circuiterie de récupération (22) configurée pour récupérer un contenu de fichier dudit fichier et/ou des métadonnées de fichier dudit fichier à partir dudit emplacement de fichier,
et facultativement dans lequel
lesdites informations sur lesdits fichiers disponibles comportent un identifiant d'une instance de travail représentant ledit travail de collecte de données associé à ladite instance d'objet de fichier représentant ledit fichier généré sur la base des données collectées pour ledit travail de collecte de données,
et facultativement dans lequel
lesdites informations sur lesdits fichiers disponibles comportent un contenu de fichier desdits fichiers disponibles et/ou des métadonnées de fichier desdits fichiers disponibles.

7. Appareil (10) selon la revendication 6, dans lequel
ladite demande de travail de collecte indique un rapport demandé basé sur fichier avec interrogation.

8. Appareil (30) comprenant
une circuiterie de réception (31) configurée pour recevoir une demande de travail de collecte demandant un travail de collecte de données,
une circuiterie de création (32) configurée pour créer une instance de travail représentant ledit travail de collecte de données, et
une circuiterie de transmission (33) configurée pour transmettre une réponse de travail de collecte,
**caractérisé en ce que**
ladite réponse de travail de collecte comporte des informations sur le téléchargement de fichiers lié audit travail de collecte de données.

9. Appareil (30) selon la revendication 8, dans lequel
ladite réponse de travail de collecte comporte ledit identifiant de ladite instance de travail.

10. Appareil (30) selon la revendication 8 ou 9, dans lequel
lesdites informations sur le téléchargement de fichiers lié audit travail de collecte de données comportent des informations sur une adresse d'abonnement de notification de disponibilité de fichier,
et facultativement comprenant en outre
une circuiterie de réception (31) configurée pour recevoir un abonnement de notification de disponibilité de fichier pour ledit travail de collecte de données créé sur la base de ladite adresse d'abonnement de notification de disponibilité de fichier,
et facultativement comprenant en outre
une circuiterie de transmission (33) configurée pour transmettre un accusé de réception d'abonnement de notification de disponibilité de fichier comportant un identifiant dudit abonnement de notification de disponibilité de fichier.

11. Appareil (30) selon la revendication 8 ou 9, dans lequel
ladite demande de travail de collecte indique une adresse de destinataire de notification, et l'appareil comprend en outre
une circuiterie de création (32) configurée pour créer un abonnement de notification de disponibilité de fichier pour ledit travail de collecte de données pour ladite adresse de destinataire de notification,
et facultativement dans lequel
ladite réponse de travail de collecte comporte un identifiant dudit abonnement de notification de disponibilité de fichier.

12. Appareil (30) selon l'une des revendications 10 et 11, dans lequel
ladite demande de travail de collecte indique un rapport demandé basé sur fichier avec des notifications.

13. Appareil (30) selon la revendication 8 ou 9, dans lequel
lesdites informations sur le téléchargement de fichiers lié audit travail de collecte de données comportent des informations sur une adresse de récupération de fichiers,
et facultativement comprenant en outre
une circuiterie de collecte (41) configurée pour collecter des données correspondant audit travail de collecte de données,
une circuiterie de génération (42) configurée pour générer un fichier à télécharger sur la base desdits données,
une circuiterie de création (32) configurée pour créer une instance d'objet de fichier représentant ledit fichier,
une circuiterie de réception (31) configurée pour recevoir une requête sur des informations sur les fichiers disponibles à partir de ladite adresse de récupération de fichiers, et
une circuiterie de transmission (33) configurée pour transmettre lesdites informations sur lesdits fichiers disponibles comportant ledit fichier,
et facultativement dans lequel
lesdites informations sur lesdits fichiers disponibles comportent des informations sur un emplacement de fichier d'une instance d'objet de fichier, et l'appareil comprend en outre
une circuiterie de fourniture (43) configurée pour fournir un contenu de fichier dudit fichier et/ou des métadonnées de fichier dudit fichier audit emplacement de fichier,
et facultativement dans lequel
lesdites informations sur lesdits fichiers disponibles comportent un identifiant d'une instance de travail représentant ledit travail de collecte de données associé à ladite instance d'objet de fichier représentant ledit fichier généré sur la base des données collectées pour ledit travail de collecte de données,
et facultativement dans lequel
lesdites informations sur lesdits fichiers disponibles comportent un contenu de fichier desdits fichiers disponibles et/ou des métadonnées de fichier desdits fichiers disponibles.

14. Appareil (30) selon la revendication 13, dans lequel
ladite demande de travail de collecte indique un rapport demandé basé sur fichier avec interrogation.

15. Procédé comprenant
la transmission (S51) d'une demande de travail de collecte demandant un travail de collecte de données, et
la réception (S52) d'une réponse de travail de collecte, dans lequel
ladite réponse de travail de collecte comporte des informations sur le téléchargement de fichiers lié audit travail de collecte de données,
ou comprenant
la réception (S61) d'une demande de travail de collecte demandant un travail de collecte de données,
la création (S62) d'une instance de travail représentant ledit travail de collecte de données, et
la transmission (S63) d'une réponse de travail de collecte, dans lequel
ladite réponse de travail de collecte comporte des informations sur le téléchargement de fichiers lié audit travail de collecte de données.
